(19) Europäisches Patentamt
European Patent Office
Office européen des brevets

(11) **EP 2 977 733 A1**

(12) **EUROPÄISCHE PATENTANMELDUNG**

(43) Veröffentlichungstag:
   **27.01.2016 Patentblatt 2016/04**

(51) Int Cl.:
   *G01K 7/42* (2006.01)   *H02P 29/00* (2016.01)

(21) Anmeldenummer: **14178540.2**

(22) Anmeldetag: **25.07.2014**

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**

(71) Anmelder: **Siemens Aktiengesellschaft**
   **80333 München (DE)**

(72) Erfinder: **Giessler, Folke**
   **96170 Lisberg (DE)**

(54) **Ermittlung einer Wicklungstemperatur einer Erregerwicklung einer fremderregten Synchronmaschine**

(57)   Die Erfindung betrifft ein Verfahren zur Ermittlung einer Wicklungstemperatur einer Erregerwicklung einer fremderregten Synchronmaschine. Dabei wird für einen Anfangszeitpunkt ein erster Temperaturschätzwert der Wicklungstemperatur vorgegeben, zu verschiedenen auf den Anfangszeitpunkt folgenden Messzeitpunkten werden jeweils eine an der Erregerwicklung anliegende elektrische Erregerspannung ($u_f$ (k)) und ein durch die Erregerwicklung fließender elektrischer Erregerstrom ($i_f$(k)) erfasst, und für jeden Messzeitpunkt wird rekursiv ein aktualisierter Temperaturschätzwert (x(k)) in Abhängigkeit von der zu dem Messzeitpunkt erfassten Erregerspannung ($u_f$ (k)), dem zu dem Messzeitpunkt erfassten Erregerstrom ($i_f$ (k)) und einem bisherigen Temperaturschätzwert (x(k-1)) gebildet.

FIG 1

EP 2 977 733 A1

**Beschreibung**

Die Erfindung betrifft ein Verfahren zur Ermittlung einer Wicklungstemperatur einer Erregerwicklung einer fremderregten Synchronmaschine.

Erregerwicklungen fremderregter Synchronmaschinen erwärmen sich während des Betriebs der Synchronmaschinen aufgrund des durch die Erregerwicklungen fließenden elektrischen Stroms. Die Erwärmung einer Erregerwicklung beeinflusst den Wirkungsgrad der Synchronmaschine und kann zu einer Schädigung der Erregerwicklung führen. Die Ermittlung und Überwachung der Wicklungstemperatur einer Erregerwicklung kann daher vorteilhaft zu einer verbesserten Nutzung einer fremderregten Synchronmaschine und/oder Vermeidung von Schäden an der Synchronmaschine verwendet werden. Prinzipiell könnte die Wicklungstemperatur durch eine Messung des elektrischen Widerstands der Erregerwicklung ermittelt werden. Dies führt jedoch nur in einem stationären Betrieb einer fremderregten Synchronmaschine zu zufriedenstellenden Ergebnissen. Bei dynamischen Vorgängen werden derartige Temperaturmessungen hingegen durch Ankerrückwirkungen und Ströme in Dämpferstromkreisen so stark verzerrt, dass eine Temperaturermittlung mittels Widerstandsmessungen praktisch nicht möglich ist.

DE 10 2008 040 725 A1 offenbart ein Verfahren zur Ermittlung einer Rotortemperatur einer permanenterregten Synchronmaschine, bei dem ein Schätzwert für die Rotortemperatur mittels eines ein thermisches Modell der Synchronmaschine enthaltenden Kalman-Filters ermittelt wird.

Der Erfindung liegt die Aufgabe zugrunde, ein geeignetes Verfahren zur Ermittlung einer Wicklungstemperatur einer Erregerwicklung einer fremderregten Synchronmaschine anzugeben. Die Aufgabe wird erfindungsgemäß durch die Merkmale des Anspruchs 1 gelöst.

Vorteilhafte Ausgestaltungen der Erfindung sind Gegenstand der Unteransprüche.

Bei dem erfindungsgemäßen Verfahren zur Ermittlung einer Wicklungstemperatur einer Erregerwicklung einer fremderregten Synchronmaschine wird für einen Anfangszeitpunkt ein erster Temperaturschätzwert der Wicklungstemperatur vorgegeben, und zu verschiedenen auf den Anfangszeitpunkt folgenden Messzeitpunkten werden jeweils eine an der Erregerwicklung anliegende elektrische Erregerspannung und ein durch die Erregerwicklung fließender elektrischer Erregerstrom erfasst. Für jeden Messzeitpunkt wird rekursiv ein aktualisierter Temperaturschätzwert in Abhängigkeit von der zu dem Messzeitpunkt erfassten Erregerspannung, dem zu dem Messzeitpunkt erfassten Erregerstrom und einem bisherigen Temperaturschätzwert gebildet.

Erfindungsgemäß wird also ein Temperaturschätzwert der Wicklungstemperatur rekursiv in Abhängigkeit von gemessenen Werten der Erregerspannung und des Erregerstroms aktualisiert. Da dabei auch der jeweilige bisherige Temperaturschätzwert in die Aktualisierung eingeht, können die Temperaturermittlung beeinflussende Störeinflüsse, beispielsweise Einflüsse einer Ankerrückwirkung und/oder starker Schwankungen von Messsignalen durch Rauschen, vorteilhaft reduziert werden und der Temperaturschätzwert kann sich schnell der tatsächlichen Wicklungstemperatur annähern. Diese rekursive Aktualisierung des Temperaturschätzwertes hat überdies den Vorteil, wenig Rechenaufwand zu benötigen, da jeweils nur der bisherige Temperaturschätzwert und nicht eine Vielzahl vorher ermittelter Temperaturwerte in die Bildung des aktualisierten Temperaturschätzwertes eingeht.

Die Erfindung ermöglicht somit, die Wicklungstemperatur einer Erregerwicklung einer fremderregten Synchronmaschine zuverlässig unter Verwendung eines Schätz-Algorithmus zu ermitteln, ohne Änderungen an der Synchronmaschine durchführen zu müssen. Da keine Änderungen der Synchronmaschine erforderlich sind, kann das Verfahren sowohl bei neu installierten als auch bei bestehenden Anlagen eingesetzt werden.

Eine Ausgestaltung der Erfindung sieht vor, dass der aktualisierte Temperaturschätzwert für einen Messzeitpunkt als ein mit einer Messwertgewichtung gewichtetes arithmetisches Mittel eines Temperaturmesswertes der Wicklungstemperatur und der Summe des bisherigen Temperaturschätzwertes und eines Korrekturwertes gemäß der Gleichung

$$x(k) = (x(k-1) + u(k)) \cdot (1 - K(k)) + K(k) \cdot z(k) \qquad [1]$$

gebildet wird. Dabei ist k ein Index, der die Messzeitpunkte aufsteigend nummeriert, und $x(k)$, $u(k)$, $z(k)$ und $K(k)$ bezeichnen jeweils den Temperaturschätzwert, den Korrekturwert, den Temperaturmesswert und die Messwertgewichtung für den k.ten Messzeitpunkt. Der Korrekturwert und der Temperaturmesswert werden in Abhängigkeit von der zu dem Messzeitpunkt erfassten Erregerspannung und dem zu dem Messzeitpunkt erfassten Erregerstrom gebildet.

Diese Ausgestaltung der Erfindung ermöglicht, den Temperaturmesswert mittels der Messwertgewichtung bei der Aktualisierung des Temperaturschätzwertes geeignet zu gewichten.

Eine weitere Ausgestaltung der Erfindung sieht vor, dass der Temperaturmesswert bei der Bildung des aktualisierten Temperaturschätzwertes mittels der Messwertgewichtung umso geringer gewichtet wird, je mehr der Temperaturmesswert von dem bisherigen Temperaturschätzwert abweicht.

Durch diese Gewichtung des Temperaturmesswerts beeinflussen große Abweichungen des Temperaturmesswertes den aktualisierten Temperaturschätzwert weniger als kleine Abweichungen. Dies ermöglicht vorteilhaft, den Einfluss großer Schwankungen der Messsignale aufgrund von Störeinflüssen, z.B. von Rauschen und/oder der Ankerrückwirkung, auf den Temperaturschätzwert zu reduzieren.

Vorzugsweise wird der Korrekturwert u(k) in Gleichung [1] gemäß der Gleichung

$$u(k) \; = \; (\Delta t/\tau) \cdot R_{th} \cdot u_f(k) \cdot i_f(k) \qquad\qquad [2]$$

gebildet. Dabei bezeichnen $u_f(k)$ die zum k.ten Messzeitpunkt erfasste Erregerspannung, $i_f(k)$ den zum k.ten Messzeitpunkt erfassten Erregerstrom, $\Delta t$ eine Zeitdauer zwischen dem (k-1).ten Messzeitpunkt und dem k.ten Messzeitpunkt, $\tau$ eine thermische Zeitkonstante der Erregerwicklung und $R_{th}$ einen thermischen Widerstand der Erregerwicklung.

Der gemäß Gleichung [2] gebildete Korrekturwert entspricht näherungsweise der Erwärmung der Erregerwicklung während der Zeitdauer $\Delta t$ und eignet sich deshalb vorteilhaft zur Korrektur des Temperaturschätzwertes x(k-1).

Ferner wird der Temperaturmesswert z(k) in Gleichung [1] vorzugsweise gemäß der Gleichung

$$z(k) \; = \; (1/\alpha) \cdot [u_f(k)/(i_f(k) \cdot R_f) \; - \; 1] \; + \; T_0 \qquad\qquad [3]$$

gebildet. Dabei bezeichnet $\alpha$ einen Temperaturkoeffizient der Erregerwicklung, $T_0$ eine Bezugstemperatur und $R_f$ einen elektrischen Bezugswiderstand der Erregerwicklung bei der Bezugstemperatur.

Gleichung [3] beschreibt näherungsweise die Temperatur der Erregerwicklung zum k.ten Messzeitpunkt in Abhängigkeit von der zu diesem Zeitpunkt erfassten Erregerspannung und dem zu diesem Zeitpunkt erfassten Erregerstrom. Die Bezugstemperatur $T_0$ ist dabei vorzugsweise eine typische Kalttemperatur der Erregerwicklung, beispielsweise 20°C, so dass Gleichung [3] eine gute Näherung für die tatsächliche Temperatur der Erregerwicklung ist.

Eine weitere Ausgestaltung der Erfindung sieht vor, dass der aktualisierte Temperaturschätzwert mittels eines Kalman-Filters ermittelt wird, wobei für den Anfangszeitpunkt ein erster Kovarianzwert vorgegeben wird, für jeden Messzeitpunkt rekursiv ein aktualisierter Kovarianzwert in Abhängigkeit von einem bisherigen Kovarianzwert und einem Modellfehlerwert gebildet wird und die Messwertgewichtung in Abhängigkeit von dem bisherigen Kovarianzwert gebildet wird.

Diese Ausgestaltung ist besonders vorteilhaft, da sich ein Kalman-Filter durch die Berücksichtigung der Kovarianz der Messsignale besonders gut zur Behandlung von die Messsignale beeinflussenden Störungen eignet.

Dabei wird der aktualisierte Kovarianzwert vorzugsweise gemäß der Gleichung

$$p(k) \; = \; (p(k-1) \; + \; Q(k)) \cdot (1 \; - \; K(k)) \qquad\qquad [4]$$

gebildet, wobei p(k) und Q(k) jeweils den Kovarianzwert und den Modellfehlerwert zum k.ten Messzeitpunkt bezeichnen.

Diese Ausgestaltung der Erfindung sieht vorteilhaft eine den Modellfehlerwert Q(k) berücksichtigende Aktualisierung des Modellfehlerwertes mit einer Gewichtung, die der Messwertgewichtung K(k) in Gleichung [1] entspricht, vor.

Ferner wird bei der Verwendung eines Kalman-Filters die Messwertgewichtung K(k) vorzugsweise gemäß der Gleichung

$$K(k) \; = \; R(k) \cdot (p(k-1) \; + \; Q(k))/[R(k) \cdot (p(k-1) \; + \; Q(k)) \; + \; 1] \qquad [5]$$

gebildet, wobei R(k) einen von dem Temperaturmesswert abhängigen Messfehlerwert bezeichnet.

Durch Gleichung [5] werden bei der Messwertgewichtung K(k) vorteilhaft der um den Modellfehlerwert Q(k) korrigierte Kovarianzwert p(k-1) und der Messfehlerwert R(k) berücksichtigt.

Dabei wird vorzugsweise eine Messfehlerstandardabweichung σ vorgegeben, und der Messfehlerwert R(k) wird aus dem Temperaturmesswert, dem bisherigen Temperaturschätzwert und der Messfehlerstandardabweichung gemäß der Gleichung

$$R(k) = \exp[-(z(k) - x(k-1))^2/(2 \cdot \sigma^2)] \hspace{3cm} [6]$$

gebildet, wobei exp die natürliche Exponentialfunktion bezeichnet.

Gleichung [6] beschreibt einen normalverteilten Messfehlerwert und bewirkt, dass große Abweichungen des Temperaturmesswertes z(k) von dem bisherigen Temperaturschätzwert x(k-1) gemäß Gleichung [5] zu einer kleinen Messwertgewichtung K(k) führen, so dass derartige Temperaturmesswerte z(k) gemäß Gleichung [1] vorteilhaft kaum zu dem aktualisierten Temperaturschätzwert x(k) beitragen.

Der Modellfehlerwert Q(k) wird beispielsweise als eine von den Messzeitpunkten unabhängige Konstante vorgegeben.

Dies ist insbesondere vorteilhaft, wenn das der Temperaturermittlung zugrunde Modell der Wicklungstemperatur, insbesondere die Gleichungen [2] und [3], eine gute Näherung für die tatsächliche Wicklungstemperatur sind.

Eine zur Verwendung eines Kalman-Filters alternative Ausgestaltung der Erfindung sieht vor, dass der aktualisierte Temperaturschätzwert mittels eines Luenberger-Beobachters ermittelt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1   ein Blockdiagramm eines Verfahrens zur Ermittlung einer Wicklungstemperatur, und

FIG 2   zeitliche Verläufe eines Temperaturschätzwertes und eines gemittelten Temperaturmesswertes einer Wicklungstemperatur.

Einander entsprechende Teile sind in den Figuren mit den gleichen Bezugszeichen versehen.

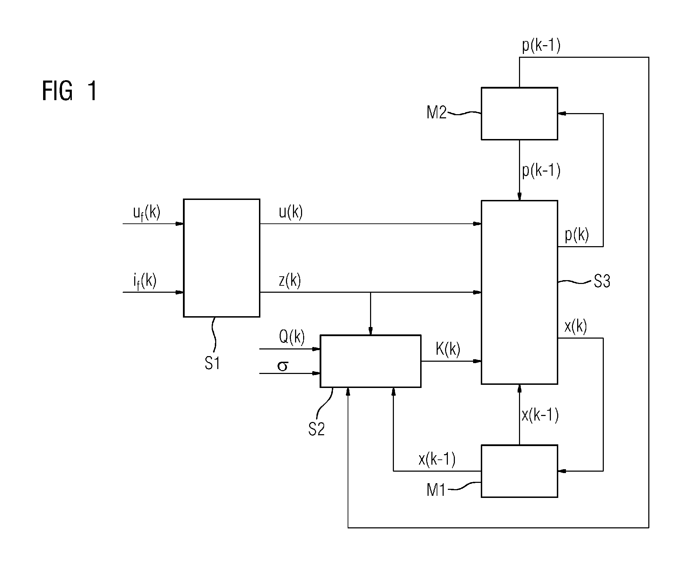

FIG 1 zeigt ein Blockdiagramm eines Verfahrens zur Ermittlung einer Wicklungstemperatur einer Erregerwicklung einer fremderregten Synchronmaschine.

Für das Verfahren wird ein thermisches Modell der Erregerwicklung formuliert, das die Wicklungstemperatur als Zustandsgröße in Abhängigkeit von zwei Messgrößen beschreibt, wobei die Messgrößen eine an der Erregerwicklung anliegende elektrische Erregerspannung $u_f(k)$ und ein durch die Erregerwicklung fließender elektrischer Erregerstrom $i_f(k)$ sind. Diese Messgrößen werden jeweils fortlaufend zu diskreten Messzeitpunkten erfasst, wobei die Messzeitpunkte und ein ihnen vorausgehender Anfangszeitpunkt eine Folge äquidistanter Zeitpunkte bilden, die durch einen Index $k \in \{0,1,2,...\}$ aufsteigend nummeriert sind. Die Zeitdauer Δt zwischen zwei aufeinander folgenden Zeitpunkten dieser Folge wird vorgegeben, beispielsweise Δt=1 ms.

Anhand des thermischen Modells werden in unten näher beschriebener Weise mittels eines Kalman-Filters rekursiv zum k.ten Messzeitpunkt ein aktualisierter Temperaturschätzwert x(k) und ein aktualisierter Kovarianzwert p(k) in Abhängigkeit von der zu diesem Messzeitpunkt erfassten Erregerspannung $u_f(k)$, dem zu diesem Messzeitpunkt erfassten Erregerstrom $i_f(k)$, dem jeweiligen bisherigen Temperaturschätzwert x(k-1) und dem jeweiligen bisherigen Kovarianzwert p(k-1) gebildet. Der jeweils aktuelle Temperaturschätzwert wird als ein Temperaturspeicherwert M1 zwischengespeichert, der jeweils aktuelle Kovarianzwert wird als ein Kovarianzspeicherwert M2 zwischengespeichert. Für den Anfangszeitpunkt werden ein erster Temperaturschätzwert x(0) und ein erster Kovarianzwert p(0), beispielsweise durch x(0)=0 und p(0)=0, vorgegeben und als Temperaturspeicherwert M1 bzw. Kovarianzspeicherwert M2 zwischengespeichert.

Mittels des Kalman-Filters werden in einem ersten Schritt S1 aus der zu dem k.ten Messzeitpunkt erfassten Erregerspannung $u_f(k)$ und dem zu dem k.ten Messzeitpunkt erfassten Erregerstrom $i_f(k)$ gemäß Gleichung [2] ein Korrekturwert u(k) und gemäß Gleichung [3] ein Temperaturmesswert z(k) gebildet. In einem zweiten Schritt S2 werden aus dem Temperaturmesswert z(k), einem Modellfehlerwert Q(k), dem bisherigen Temperaturschätzwert x(k-1), dem bisherigen Kovarianzwert p(k-1) und einer geeignet vorgegebenen Messfehlerstandardabweichung σ gemäß den Gleichungen [5] und [6] eine Messwertgewichtung K(k) gebildet. In einem dritten Schritt S3 werden aus dem bisherigen Temperaturschätzwert x(k-1), dem Korrekturwert u(k), dem Temperaturmesswert z(k) und der Messwertgewichtung K(k) gemäß Gleichung [1] der aktualisierte Temperaturschätzwert x(k) und aus dem bisherigen Kovarianzwert p(k-1), dem Modellfehlerwert Q(k) und der Messwertgewichtung K(k) gemäß Gleichung [4] der aktualisierte Kovarianzwert p(k) gebildet. Anschließend werden der bisherige Temperaturschätzwert x(k-1) durch den aktualisierten Temperaturschätzwert x(k) als Temperaturspeicherwert M1 und der bisherige Kovarianzwert p(k-1) durch den aktualisierten Kovarianzwert p(k) als Kovarianzspeicherwert M2 ersetzt.

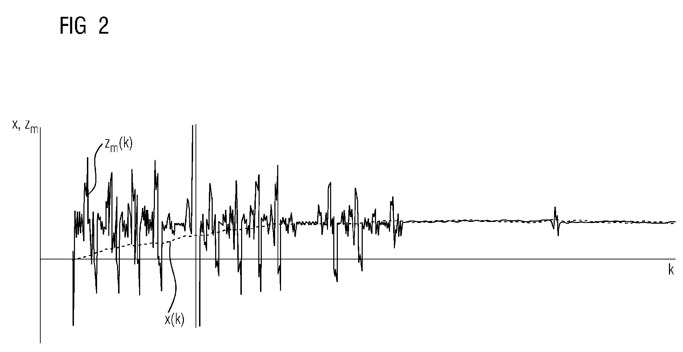

FIG 2 zeigt Verläufe eines mittels eines oben anhand von FIG 1 beschriebenen Kalman-Filters aktualisierten Temperaturschätzwertes x(k) und eines gemittelten Temperaturmesswertes $z_m$(k) einer Wicklungstemperatur in Abhängigkeit von den Indexwerten des Index k. Dargestellt ist ein Zeitabschnitt von etwa 200 Sekunden bei einer Zeitdauer $\Delta$t=1 ms zwischen zwei aufeinander folgenden Messzeitpunkten. Der gemittelte Temperaturmesswert $z_m$(k) ergibt sich aus einer gleitenden Mittelung der Temperaturmesswerte z(k) über jeweils eine Sekunde, d.h. über 1000 Messzeitpunkte. Aus FIG 2 wird deutlich, dass selbst der gemittelte Temperaturmesswert $z_m$(k) im dynamischen Betrieb der Erregerwicklung zeitlich derart schwankt, dass er sich nicht für eine Ermittelung der Wicklungstemperatur der Erregerwicklung eignet. Dagegen stellt sich der aktualisierte Temperaturschätzwert x(k) trotz des stark schwankenden Temperaturmesswertes z(k) schnell, etwa innerhalb von 60 Sekunden, auf die tatsächliche Wicklungstemperatur der Erregerwicklung ein.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Ermittlung einer Wicklungstemperatur einer Erregerwicklung einer fremderregten Synchronmaschine, wobei

   - für einen Anfangszeitpunkt ein erster Temperaturschätzwert der Wicklungstemperatur vorgegeben wird,
   - zu verschiedenen auf den Anfangszeitpunkt folgenden Messzeitpunkten jeweils eine an der Erregerwicklung anliegende elektrische Erregerspannung ($u_f$(k)) und ein durch die Erregerwicklung fließender elektrischer Erregerstrom ($i_f$(k)) erfasst werden, und
   - für jeden Messzeitpunkt rekursiv ein aktualisierter Temperaturschätzwert (x(k)) in Abhängigkeit von der zu dem Messzeitpunkt erfassten Erregerspannung ($u_f$(k)), dem zu dem Messzeitpunkt erfassten Erregerstrom ($i_f$(k)) und einem bisherigen Temperaturschätzwert (x(k-1)) gebildet wird.

2. Verfahren nach Anspruch 1,
   **dadurch gekennzeichnet, dass** der aktualisierte Temperaturschätzwert (x(k)) für einen Messzeitpunkt als ein mit einer Messwertgewichtung (K(k)) gewichtetes arithmetisches Mittel eines Temperaturmesswertes (z(k)) der Wicklungstemperatur und der Summe des bisherigen Temperaturschätzwertes (x(k-1)) und eines Korrekturwertes (u(k)) gemäß der Gleichung

$$x(k) = (x(k-1) + u(k)) \cdot (1 - K(k)) + K(k) \cdot z(k)$$

   gebildet wird, wobei der Korrekturwert (u(k)) und der Temperaturmesswert (z(k)) in Abhängigkeit von der zu dem Messzeitpunkt erfassten Erregerspannung ($u_f$(k)) und dem zu dem Messzeitpunkt erfassten Erregerstrom ($i_f$(k)) gebildet werden.

3. Verfahren nach Anspruch 2,
   **dadurch gekennzeichnet, dass** der Temperaturmesswert (z(k)) bei der Bildung des aktualisierten Temperaturschätzwertes (x(k)) mittels der Messwertgewichtung (K(k)) umso geringer gewichtet wird, je mehr der Temperaturmesswert (z(k)) von dem bisherigen Temperaturschätzwert (x(k-1)) abweicht.

4. Verfahren nach Anspruch 2 oder 3,
   **dadurch gekennzeichnet, dass** der Korrekturwert (u(k)) gemäß der Gleichung

$$u(k) = (\Delta t / \tau) \cdot R_{th} \cdot u_f(k) \cdot i_f(k)$$

gebildet wird, wobei $\Delta t$ eine Zeitdauer zwischen zwei aufeinander folgenden Messzeitpunkten, $\tau$ eine thermische Zeitkonstante der Erregerwicklung und $R_{th}$ einen thermischen Widerstand der Erregerwicklung bezeichnen.

**5.** Verfahren nach einem der Ansprüche 2 bis 4,
**dadurch gekennzeichnet, dass** der Temperaturmesswert (z(k)) gemäß der Gleichung

$$z(k) = (1/\alpha) \cdot [u_f(k)/(i_f(k) \cdot R_f) - 1] + T_0$$

gebildet wird, wobei $\alpha$ einen Temperaturkoeffizient der Erregerwicklung, $T_0$ eine Bezugstemperatur und $R_f$ einen elektrischen Bezugswiderstand der Erregerwicklung bei der Bezugstemperatur bezeichnen.

**6.** Verfahren nach einem der Ansprüche 2 bis 5,
**dadurch gekennzeichnet, dass** der aktualisierte Temperaturschätzwert (x(k)) mittels eines Kalman-Filters ermittelt wird, wobei für den Anfangszeitpunkt ein erster Kovarianzwert vorgegeben wird, für jeden Messzeitpunkt rekursiv ein aktualisierter Kovarianzwert (p(k)) in Abhängigkeit von einem bisherigen Kovarianzwert (p(k-1)) und einem Modellfehlerwert (Q(k)) gebildet wird und die Messwertgewichtung (K(k)) in Abhängigkeit von dem bisherigen Kovarianzwert (p(k-1)) gebildet wird.

**7.** Verfahren nach Anspruch 6,
**dadurch gekennzeichnet, dass** der aktualisierte Kovarianzwert (p(k)) gemäß der Gleichung

$$p(k) = (p(k-1) + Q(k)) \cdot (1 - K(k))$$

gebildet wird.

**8.** Verfahren nach Anspruch 6 oder 7,
**dadurch gekennzeichnet, dass** die Messwertgewichtung (K(k)) gemäß der Gleichung

$$K(k) = R(k) \cdot (p(k-1) + Q(k))/[R(k) \cdot (p(k-1) + Q(k)) + 1]$$

gebildet wird, wobei R(k) einen von dem Temperaturmesswert (z(k)) abhängigen Messfehlerwert bezeichnet.

**9.** Verfahren nach Anspruch 8,
**dadurch gekennzeichnet, dass** eine Messfehlerstandardabweichung ($\sigma$) vorgegeben wird und der Messfehlerwert aus dem Temperaturmesswert (z(k)), dem bisherigen Temperaturschätzwert (x(k-1)) und der vorgegebenen Messfehlerstandardabweichung ($\sigma$) gemäß der Gleichung

$$R(k) = \exp[-(z(k) - x(k-1))^2/(2 \cdot \sigma^2)]$$

gebildet wird.

**10.** Verfahren nach einem der Ansprüche 6 bis 9,
**dadurch gekennzeichnet, dass** der Modellfehlerwert (Q(k)) als eine von den Messzeitpunkten unabhängige Konstante vorgegeben wird.

**11.** Verfahren nach einem der Ansprüche 1 bis 5,
**dadurch gekennzeichnet, dass** der aktualisierte Temperaturschätzwert (x(k)) mittels eines Luenberger-Beobach-

ters ermittelt wird.

FIG 1

FIG 2

Europäisches
Patentamt

European
Patent Office

Office européen
des brevets

# EUROPÄISCHER RECHERCHENBERICHT

Nummer der Anmeldung

EP 14 17 8540

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2008 040725 A1 (BOSCH GMBH ROBERT [DE]) 28. Januar 2010 (2010-01-28) | 1-3,5 | INV. G01K7/42 H02P29/00 |
| A | * Absätze [0001], [0007], [0008], [0011], [0021] - [0050] *<br>----- | 4,6-11 | |
| A | DE 10 2009 014960 A1 (SEW EURODRIVE GMBH & CO [DE]) 7. Oktober 2010 (2010-10-07) * Absätze [0019], [0024]; Abbildung 1 *<br>----- | 1-11 | |

RECHERCHIERTE SACHGEBIETE (IPC)

G01K
H02P

Der vorliegende Recherchenbericht wurde für alle Patentansprüche erstellt

| Recherchenort | Abschlußdatum der Recherche | Prüfer |
|---|---|---|
| Den Haag | 15. Oktober 2014 | Phleps, Stefanie |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 17 8540

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2014

| Im Recherchenbericht angeführtes Patentdokument | Datum der Veröffentlichung | Mitglied(er) der Patentfamilie | Datum der Veröffentlichung |
|---|---|---|---|
| DE 102008040725 A1 | 28-01-2010 | DE 102008040725 A1<br>EP 2318818 A1<br>US 2011181217 A1<br>WO 2010009984 A1 | 28-01-2010<br>11-05-2011<br>28-07-2011<br>28-01-2010 |
| DE 102009014960 A1 | 07-10-2010 | CN 102369653 A<br>DE 102009014960 A1<br>EP 2415143 A1<br>WO 2010112139 A1 | 07-03-2012<br>07-10-2010<br>08-02-2012<br>07-10-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102008040725 A1